# EUROPEAN PATENT SPECIFICATION

(11) **EP 4 543 941 B1**
(45) Date of publication and mention of the grant of the patent: **01.07.2026**
(21) Application number: 23754017.4
(22) Date of filing: 14.07.2023
(51) Int. Cl.: C08F 8/34, D04H 3/007, D04H 3/03, D04H 3/16

(54) **REVERSIBLE CROSSLINKED 3D LOOP ARTICLE AND PROCESS**
UMKEHRBARER VERNETZTER 3D-SCHLEIFENARTIKEL UND VERFAHREN
ARTICLE EN BOUCLE 3D RÉTICULÉ RÉVERSIBLE ET PROCESSUS

(30) Priority: 15.07.2022 US 202263389707 P; 15.07.2022 US 202263389738 P
(43) Date of publication of application: 30.04.2025
(73) Proprietor: Dow Global Technologies, LLC, Midland, MI 48674 (US)
(72) Inventor: MUNRO, Jeffrey, C., Lake Jackson, TX 77566 (US); CHEN, Xi, Lake Jackson, TX 77566 (US); LI PI SHAN, Colin, Lake Jackson, TX 77566 (US); WU, Gaoxiang, Lake Jackson, TX 77566 (US); BROWN, Hayley, A., Lake Jackson, TX 77566 (US); AUYEUNG, Evelyn, Lake Jackson, TX 77566 (US); SZUROMI, Endre, Lake Jackson, TX 77566 (US); CESPEDES, Gerardo, Lake Jackson, TX 77566 (US)
(74) Representative: Boult Wade Tennant LLP
(86) International application number: PCT/US2023/027780
(87) International publication number: WO 2024/015579

(56) References cited:
- EP-A1- 3 932 906
- US-A1- 2016 122 925
- US-A1- 2022 025 096
- BIN RUSAYYIS MOHAMMED ET AL: "Recyclable Polymethacrylate Networks Containing Dynamic Dialkylamino Disulfide Linkages and Exhibiting Full Property Recovery", MACROMOLECULES, vol. 53, no. 19, 25 September 2020 (2020-09-25), US, pages 8367 - 8373, XP055929002, ISSN: 0024-9297, DOI: 10.1021/acs.macromol.0c01539

## Description

### BACKGROUND

Three-dimensional loop ("3DL") cushions made with thermoplastic resins have been developed for applications such as automotive seating and consumer mattresses. 3DL cushions made with thermoplastic resins have become a viable alternative to thermoset polyurethane foams. Since 3DL cushions are made with thermoplastic resins, these 3DL structures can be recycled via melt processing. Polyolefins with a density from 0.860 g/cc to 0.925 g/cc and a melt index (MI) from 0.5 g/10 min to 30 g/10 min viscosity range have been demonstrated to be useful in the production of 3D loop cushions with a good balance of properties.

For certain 3DL cushion applications, and 3DL cushion transportation applications in particular (including automotive, trains, buses), high heat resistance (compression set at elevated temperatures) is required for the cushion article. The heat resistance of current polyolefin solutions is not adequate for certain transportation applications. While crosslinking can be used to improve the heat resistance of these articles, conventional crosslinked 3DL cushion materials cannot be recycled via melt processing. Thus, the art recognizes the need for 3DL cushion materials with (i) high heat resistance (ii) that are recyclable via melt processing.

BIN RUSAYYIS MOHAMMED ET AL: "Recyclable Polymethacrylate Networks Containing Dynamic Dialkylamino Disulfide Linkages and Exhibiting Full Property Recovery", MACROMOLECULES, vol. 53, no. 19, 25 September 2020, discloses reprocessable polymer networks which employ bis(2,2,6,6-tetramethyl-4-piperidyl methacrylate) disulfide to create covalent bond from monomers and/or polymers containing carbon-carbon double bonds that are amenable to free-radical polymerization.

US 2022/025096 A1 discloses a composition for forming a dynamic crosslinked polymer network, the composition comprising a dynamic crosslinker being bis(2,2,6,6-tetramethyl-4-piperidyl methacrylate) disulfide; a polymer comprising a C-C double bond capable of undergoing free radical polymerization, a monomer comprising a C-C double bond capable of undergoing free radical polymerization, or combinations thereof; and a free radical initiator.

EP 3 932 906 A1 discloses a composition comprising bis(4-(methacryloyloxy)-2,2,6,6-tetramethylpiperidin-1-yl)disulfide, a monomer having a carbon carbon double bond and a free radical initiator.

US 2016/122925 A1 discloses a three-dimensional random loop material comprising a web structure of a multitude of winding continuous fibers melt-bonded together at a multitude of contact points to form a multitude of loops; each continuous fiber comprising an ethylene/1-octene copolymer blend.

### SUMMARY

The present disclosure provides an article. In an embodiment, the article a three-dimensional random loop material ("3DRLM") composed of a web structure of a multitude of winding continuous strands melt-bonded together at a multitude of contact points to form a multitude of loops. Each continuous strand is composed of a crosslinked composition formed from starting materials comprising (i) an ethylene-based polymer, and (ii) 2,2,6,6-tetramethyl-4-piperidyl methacrylate disulfide (BiTEMPS methacrylate). This yields a 3DRLM that is composed of a crosslinked composition comprising (i) an ethylene-based polymer, and (ii) linkages having a Structure (2) below

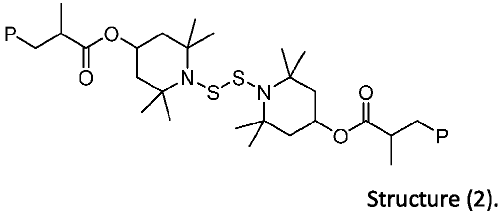

The present disclosure provides a process. In an embodiment, the process includes heating a first article to a reprocessing temperature, the first article composed of a three-dimensional random loop material comprising a web structure of a multitude of winding continuous strands melt-bonded together at a multitude of contact points to form a multitude of loops, each continuous strand composed of a crosslinked composition comprising (i) an ethylene-based polymer, and (ii) linkages having a Structure (2) 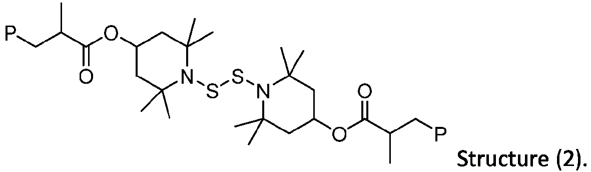 The coating is formed from starting materials of the ethylene-based polymer, and 2,2,6,6-tetramethyl-4-piperidyl methacrylate disulfide (BiTEMPS) methacrylate. The process includes heating the coating to a reprocessing temperature, and forming, at the reprocessing temperature, the coating into a re-processable ethylene-based polymer composition. The process includes shaping, at the reprocessing temperature, the re-processable ethylene-based polymer composition into a re-processed pre-form. The process includes cooling the re-processed pre-form to below the reprocessing temperature and forming a second article composed of a re-crosslinked ethylene-based polymer composition composed of (i) the ethylene-based polymer and (ii) linkages having the Structure (2).

### BRIEF DESCRIPTION OF THE DRAWINGS

FIG. 1 is a perspective view of a slab of three-dimensional random loop material in accordance with an embodiment of the present disclosure.
FIG. 1A is an enlarged perspective view of Area 1A of FIG. 1.
FIG. 2 is a table showing photographs of a top-down view for each compression molded puck sample of example CS-1, IE-A, IE-B, IE-C, and IE-D after compression at 125° C. for 22 hours, 25% strain.

### DEFINTIONS

All references to the Periodic Table of the Elements herein shall refer to the Periodic Table of the Elements, published and copyrighted by CRC Press, Inc., 2003. Also, any references to a Group or Groups shall be to the Group or Groups reflected in this Periodic Table of the Elements using the IUPAC system for numbering groups. Unless stated to the contrary, implicit from the context, or customary in the art, all parts and percentages are based on weight.

The numerical ranges disclosed herein include all values from, and including, the lower value and the upper value. For ranges containing explicit values (e.g., a range from 1, or 2, or 3 to 5, or 6, or 7) any subrange between any two explicit values is included (e.g., the range 1-7 above includes subranges from 1 to 2; from 2 to 6; from 5 to 7; from 3 to 7; from 5 to 6; etc.).

Unless stated to the contrary, implicit from the context, or customary in the art, all parts and percentages are based on weight, and all test methods are current as of the filing date of this disclosure.

The term "composition," as used herein, refers to a mixture of materials which comprise the composition, as well as reaction products and decomposition products formed from the materials of the composition.

The terms "comprising," "including," "having," and their derivatives, are not intended to exclude the presence of any additional component, step, or procedure, whether or not the same
is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

An "ethylene-based polymer" is a polymer that contains more than 50 mol% polymerized ethylene monomer (based on the total amount of polymerizable monomers) and, optionally, may contain at least one comonomer. Ethylene-based polymer includes ethylene homopolymer, and ethylene copolymer (meaning units derived from ethylene and one or more comonomers). The terms "ethylene-based polymer" and "polyethylene" may be used interchangeably. Nonlimiting examples of ethylene-based polymer (polyethylene) include low density polyethylene (LDPE) and linear polyethylene. Nonlimiting examples of linear polyethylene include linear low density polyethylene (LLDPE), ultra low density polyethylene (ULDPE), very low density polyethylene (VLDPE), ethylene/α-olefin multi-block copolymers (also known as olefin block copolymer (OBC)), substantially linear, or linear, plastomers/elastomers, and high density polyethylene (HDPE). Generally, polyethylene may be produced in gas-phase, fluidized bed reactors, liquid phase slurry process reactors, or liquid phase solution process reactors, using a heterogeneous catalyst system, such as Ziegler-Natta catalyst, a homogeneous catalyst system, comprising Group 4 transition metals and ligand structures such as metallocene, non-metallocene metal-centered, heteroaryl, heterovalent aryloxyether, phosphinimine, and others. Combinations of heterogeneous and/or homogeneous catalysts also may be used in either single reactor or multiple reactor configurations.

"Ethylene plastomers/elastomers" are substantially linear, or linear, ethylene/α-olefin interpolymers containing homogeneous short-chain branching distribution comprising units derived from ethylene and units derived from at least one C₃-C₁₀ α-olefin comonomer. Ethylene plastomers/elastomers have a density from 0.854 g/cc to 0.917 g/cc. Nonlimiting examples of ethylene plastomers/elastomers include AFFINITY^{™} Polyolefin Plastomers and ENGAGE^{™} Polyolefin Elastomers (available from The Dow Chemical Company), EXACT^{™} Plastomers (available from ExxonMobil Chemical), Tafmer^{™} Alpha-olefin copolymers (available from Mitsui), Solumer^{™} Polyolefin Elastomers and Supreme^{™} Polyolefin Plastomers (available from SK Chemicals Co.), and Lucene^{™} Polyolefin Elastomers (available from LG Chem Ltd.).

"High density polyethylene" (or "HDPE") is an ethylene homopolymer or an ethylene/α-olefin copolymer with at least one C₄-C₁₀ α -olefin comonomer, or C₄-C₈ α-olefin comonomer, and a density from 0.940 g/cc, or 0.945 g/cc, or 0.950 g/cc, or 0.953 g/cc to 0.955 g/cc, or 0.960 g/cc, or 0.965 g/cc, or 0.970 g/cc, or 0.975 g/cc, or 0.980 g/cc. The HDPE can be a monomodal copolymer or a multimodal copolymer. A "monomodal ethylene copolymer" is an ethylene/C₄-C₁₀ α-olefin copolymer that has one distinct peak in a gel permeation chromatography (GPC) showing the molecular weight distribution. A "multimodal ethylene copolymer" is an ethylene/C₄-C₁₀ α -olefin copolymer that has at least two distinct peaks in a GPC showing the molecular weight distribution. Multimodal includes copolymer having two peaks (bimodal) as well as copolymer having more than two peaks. Nonlimiting examples of HDPE include DOW^{™} High Density Polyethylene (HDPE) Resins (available from The Dow Chemical Company), ELITE^{™} Enhanced Polyethylene Resins (available from The Dow Chemical Company), CONTINUUM^{™} Bimodal Polyethylene Resins (available from The Dow Chemical Company), LUPOLEN^{™} (available from LyondellBasell), as well as HDPE products from Borealis, Ineos, and ExxonMobil.

"Linear low density polyethylene" (or "LLDPE") is a linear ethylene/α-olefin copolymer containing homogeneous or heterogeneous short-chain branching distribution comprising units derived from ethylene and units derived from at least one C₃-C₁₀ α-olefin, or C₄-C₈ α-olefin, comonomer. LLDPE is characterized by little, if any, long chain branching, in contrast to conventional LDPE. LLDPE has a density from 0.910 g/cc to less than 0.940 g/cc. Nonlimiting examples of LLDPE include ELITE^{™} Enhanced Polyethylene Resins, TUFLIN^{™} linear low density polyethylene resins (available from The Dow Chemical Company), DOWLEX^{™} polyethylene resins (available from the Dow Chemical Company), and MARLEX^{™} polyethylene (available from Chevron Phillips).

"Low density polyethylene" (or "LDPE") consists of ethylene homopolymer, or ethylene/α-olefin copolymer comprising at least one C₃-C₁₀ α-olefin, or C₄-C₈ α-olefin, that has a density from 0.915 g/cc to less than 0.940 g/cc and contains long chain branching with broad molecular weight distribution. LDPE is typically produced by way of high pressure free radical polymerization (tubular reactor or autoclave with free radical initiator). Nonlimiting examples of LDPE include AGILITY^{™} Performance LDPE and DOW^{™} LDPE (available from The Dow Chemical Company), MarFlex^{™} (Chevron Phillips), LUPOLEN^{™} (LyondellBasell), as well as LDPE products from Borealis, Ineos, ExxonMobil, and others.

An "olefin-based polymer," or "polyolefin," as used herein is a polymer that contains more than 50 mole percent polymerized olefin monomer (based on total amount of polymerizable monomers), and optionally, may contain at least one comonomer. Nonlimiting examples of olefin-based polymer include ethylene-based polymer and propylene-based polymer.

A "polymer" is a compound prepared by polymerizing monomers, whether of the same or a different type, that in polymerized form provide the multiple and/or repeating "units" or "mer units" that make up a polymer. The generic term polymer thus embraces the term homopolymer, usually employed to refer to polymers prepared from only one type of monomer, and the term copolymer, usually employed to refer to polymers prepared from at least two types of monomers. It also embraces all forms of copolymer, e.g., random, block, etc. The terms "ethylene/α-olefin polymer" and "propylene/α-olefin polymer" are indicative of copolymer as described above prepared from polymerizing ethylene or propylene respectively and one or more additional, polymerizable α-olefin monomer. It is noted that although a polymer is often referred to as being "made of" one or more specified monomers, "based on" a specified monomer or monomer type, "containing" a specified monomer content, or the like, in this context the term "monomer" is understood to be referring to the polymerized remnant of the specified monomer and not to the unpolymerized species. In general, polymers herein are referred to as being based on "units" that are the polymerized form of a corresponding monomer.

### TEST METHODS

Apparent density. A sample material was cut into a square piece of 38 cm ^{χ} 38 cm (15 in x 15 in) in size. The volume of this piece was calculated from the thickness measured at four points. The division of the weight by the volume gives the apparent density (an average of four measurements is taken) with values reported in grams per cubic centimeter, g/cc.

Compression Set. Compression set was measured using one specimen per sample according to ASTM D395, Method B with 25% strain at 70° C. for 22 hours (hr).

Density was measured in accordance with ASTM D792, Method B using isopropanol with results reported in g/cc at 25° C.

Rheology analysis using Rubber Process Analyzer (RPA). Rheology of the compositions was measured using a rotorless oscillating shear rheometer, Alpha Technologies RPA 2000 instrument, according to ASTM D6204, under the following test conditions and exceptions. The sample was placed between two pieces of Mylar film for analysis. Rheology was monitored during an initial timed test at 160° C., 1.0 rad/s, 7% strain, for 60 min. Elastic torque, S', at the end of the 60 min crosslinking step was recorded. Immediately following the 60 min at 160° C., a frequency sweep from 0.1 to 300 rad/s was conducted at 160° C., 7% strain on the same sample, followed by a frequency sweep from 0.1 to 300 rad/s at 190° C., 7% strain, and followed by a frequency sweep from 0.1 to 300 rad/s at 230° C., 7% strain. The dynamic complex viscosity, n*, and tan delta were recorded for each frequency sweep. In ASTM D6204, frequency sweeps on unvulcanized rubber are conducted prior to a cure step. In this case, frequency sweeps were conducted after the initial crosslinking step at 160° C. to evaluate the reversibility of the crosslinking.

Melt index (MI or I₂) (for ethylene-based polymers) is measured in accordance with ASTM D 1238, Condition 190°C/2.16 kg with results reported in grams per 10 minutes (g/10 min).

Strand debonding force. Samples were prepared by extruding strands on a Xplore MC 40 micro compounder ("MC 40") and collecting the coiled strand. 20 g of sample were processed on the MC 40. The temperature was set to 200° C. for all runs. Initially the screw speed was set to 25 rpm. Approximately 10 g of sample was added to the MC 40 and allowed to melt for about 30 s. Then, an additional 10 g of sample was added. The screw speed was increased to 50 rpm. Then, the material was recirculated in the micro compounder for 5 min at which time a stable torque reading was achieved. A single extrudate strand approximately 4 mm in diameter was then extruded from the micro compounder. The extruded strand was collected on a Teflon sheet held approximately 15.24 cm (6 inches) from the die exit and moved by hand to collect a coiled strand where the extrudate coiled on itself to form junction points, replicating the 3D loop extrusion and bonding process. The coiled strand was allowed to cool to room temperature. The strength of the strand junctions was evaluated by cutting individual bonded junction points from the coiled strand and evaluating under uniaxial tension on an Instron test frame. Samples were tested at room temperature with a crosshead displacement speed of 12.7 cm/min (5 inch/min). The peak load to either break the strand or debond the strand at the junction point was recorded. The average peak load for 3 to 5 specimens for each sample was reported.

### DETAILED DESCRIPTION

The present disclosure is an article. The article is composed of a three-dimensional random loop material (or "3DRLM"). The 3DRLM includes a web structure of a multitude of winding continuous strands melt-bonded together at a multitude of contact points to form a multitude of loops. Each continuous strand is composed of a crosslinked polymer composition formed from starting materials comprising (i) an ethylene-based polymer and (ii) 2,2,6,6-tetramethyl-4-piperidyl methacrylate disulfide (BiTEMPS methacrylate).

### A. 3DRLM

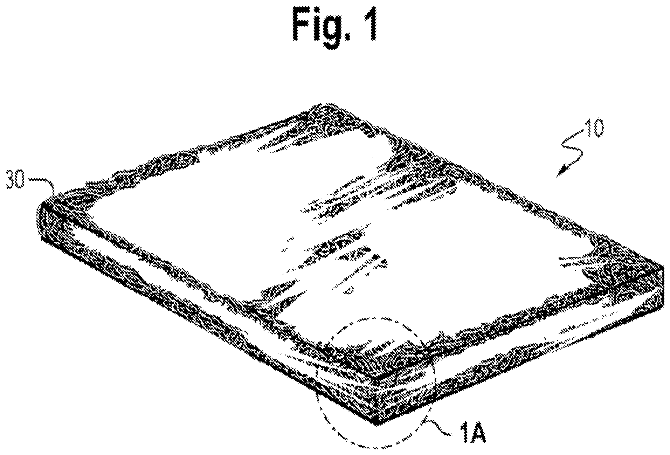

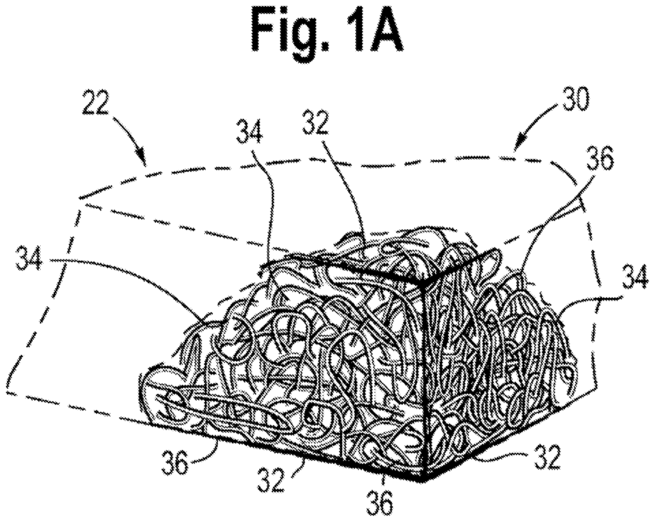

The present disclosure is directed to an article composed of a three-dimensional random loop material (or "3DRLM"). For illustration purposes, FIG. 1 shows a slab 10 that is composed of a three-dimensional random loop material 30. It is understood that the 3DRLM may embody myriad different shapes and is not limited to a slab. The slab 10 has a geometric shape. A "geometric shape," as used herein, is a three dimensional shape or a three dimensional configuration having a length, a width, and a height. The geometric shape can be a regular three dimensional shape, an irregular three dimensional shape, and combinations thereof. Nonlimiting examples of regular three-dimensional shapes include cube, prism, sphere, cone, and cylinder. The slab may be solid or hollow. It is understood that when the geometric shape of the slab is a prism, the prism can have a cross-sectional shape that is a regular polygon, or an irregular polygon having three, four, five, six, seven, eight, nine, 10 or more sides. It is further understood
that when the geometric shape of the slab is a cylinder, the cylinder can have a cross-sectional shape that is an ellipse or a circle.

The slab 10 is composed of a three-dimensional random loop material 30. As shown in FIG. 1A, a "three-dimensional random loop material" (or "3DRLM") is a mass or a structure of a multitude of loops 32 formed by allowing continuous strands 34, to wind, permitting respective loops to come in contact with one another in a molten state and to be heat-bonded, or otherwise melt-bonded, at the contact points 36. Even when a great stress to cause significant deformation is given, the 3DRLM 30 absorbs the stress with the entire net structure composed of three-dimensional random loops melt-integrated, by deforming itself; and once the stress is lifted, elastic resilience of the polymer manifests itself to allow recovery to the original shape of the structure. When a net structure composed of continuous strands made from a known non-elastic polymer is used as a cushioning material, plastic deformation is developed and the recovery cannot be achieved, thus resulting in poor durability. When the strands are not melt-bonded at contact points, the shape cannot be retained and the structure does not integrally change its shape, with the result that a fatigue phenomenon occurs due to the concentration of stress, thus degrading durability and deformation resistance. In certain embodiments, melt-bonding is the state where all contact points are melt-bonded.

A nonlimiting method for producing 3DRLM 30 includes the steps of (a) heating a molten olefin-based polymer (ethylene-based polymer, BiTEMPS methacrylate, free radical initiator), at a temperature 10° C.-140° C. higher than the melting point and/or glass transition temperature of the polymer in a typical melt-extruder; (b) discharging the molten interpolymer to the downward direction from a die with plural orifices to form continuous strands that fall naturally (due to gravity); contacting the extruded strands in a fluid below the crystallization temperature of the polymer (for example a water bath) allowing the strands to form loops while solidifying. The polymer may be used in combination with a thermoplastic elastomer, thermoplastic non-elastic polymer or a combination thereof. The distance between the die surface and take-off conveyors installed on a cooling unit for solidifying the strands, melt viscosity of the polymer, diameter of orifice, and the amount to be discharged are the elements which decide loop diameter and diameter of the strands. Loops are formed by holding and allowing the delivered molten strands to reside between a pair of take-off conveyors (belts, or rollers) set on a cooling unit (the distance therebetween being adjustable), bringing the loops thus formed into contact with one another by adjusting the distance between the orifices to this end such that the loops in contact are heat-bonded, or otherwise melt-bonded, as they form a three-dimensional random loop structure. Then, the continuous strands, wherein contact points have been heat-bonded as the loops form a three-dimensional random loop structure, are continuously taken into a cooling unit for solidification to give a net structure. Thereafter, the structure is cut into a desired length and shape. The method is characterized in that the olefin-based polymer is melted and heated at a temperature 10° C.-140° C. higher than the melting point of the interpolymer and delivered to the downward direction in a molten state from a die having plural orifices. When the polymer is discharged at a temperature less than 10° C. higher than the melting point, the strand delivered becomes cool and less fluidic to result in insufficient heat-bonding of the contact points of the strands.

Properties, such as, the loop diameter and diameter of the strands constituting the cushioning net structure provided herein depend on the distance between the die surface and the take-off conveyors installed on a cooling unit for solidifying the interpolymer, speed of the take-off conveyors, melt viscosity of the interpolymer, diameter of orifice, and the amount of the interpolymer to be delivered therefrom. For example, a decreased amount of the interpolymer to be delivered and a lower melt viscosity, larger distance between die and conveyer and higher conveyor speed upon delivery result in smaller diameter of the strands and smaller average loop diameter of the random loop. On the contrary, a shortened distance between the die surface and the take-off conveyor installed on the cooling unit for solidifying the interpolymer results in a slightly greater diameter of the strand and a greater average loop diameter of the random loop. Orifice diameter also influences the strand diameter and the loop diameter. A lower orifice diameter yields strands with lower diameter and smaller loop diameter. Larger orifice diameter yields larger strand diameter and larger loop diameter. These conditions in combination afford the desirable diameter of the continuous strands of from 0.1 mm to 4 mm and an average diameter of the random loop of not more than 100 mm, or from 1 millimeter (mm), or 2 mm, or 10 mm to 25 mm, or 50 mm. By adjusting the distance to the aforementioned conveyor, the thickness of the structure can be controlled while the heat-bonded net structure is in a molten state and a structure having a desirable thickness and flat surface formed by the conveyors can be obtained. Too great a conveyor speed results in failure to heat-bond the contact points, since cooling proceeds before the heat-bonding. On the other hand, too slow a speed can cause higher density resulting from excessively long dwelling of the molten material. In some embodiments the distance to the conveyor and the conveyor speed should be selected such that the desired apparent density of 0.005-0.1 g/cc or 0.01-0.05 g/cc can be achieved.

The 3DRLM 30 is formed into a three dimensional geometric shape to form a slab (i.e., a prism). The 3DRLM 30 is an elastic material which can be compressed and stretched and return to its original geometric shape. An "elastic material," as used herein, is a rubber-like material that can be compressed and/or stretched and which expands/retracts very rapidly to approximately its original shape/length when the force exerting the compression and/or the stretching is released. The three dimensional random loop material 30 has a "neutral state" when no compressive force and no stretch force is imparted upon the 3DRLM 30. The three dimensional random loop material 30 has "a compressed state" when a compressive force is imparted upon the 3DRLM 30. The three dimensional random loop material 30 has "a stretched state" when a stretching force is imparted upon the 3DRLM 30.

### B. Ethylene-based polymer

The 3DRLM is formed from a crosslinkable polymer composition (interchangeably referred to as "starting materials") that includes an ethylene-based polymer. The ethylene-based polymer can be an ethylene homopolymer, an ethylene/α-olefin interpolymer, or an ethylene/C₄-C₂₀ α-olefin copolymer. In embodiments herein, the ethylene-based comprises greater than 50 wt. % of the units derived from ethylene and less than 30 wt. % of the units derived from one or more α-olefin comonomers (based on the total amount of polymerizable monomers). All individual values and subranges of greater than 50 wt. % of the units derived from ethylene and less than 30 wt. % of the units derived from one or more α-olefin comonomers. Suitable α-olefin comonomers typically have no more than 20 carbon atoms. For example, the α-olefin comonomers may have 3 to 10 carbon atoms, or 3 to 8 carbon atoms. Exemplary α-olefin comonomers include, but are not limited to, propylene, 1-butene, 1-pentene, 1-hexene, 1-heptene, 1-octene, 1-nonene, 1-decene, and 4-methyl-1-pentene. The one or more α-olefin comonomers may, for example, be selected from the group consisting of propylene, 1-butene, 1-hexene, and 1-octene; or in the alternative, from the group consisting of 1-butene, 1-hexene and 1-octene, or in the alternative, from the group consisting of 1-hexene and 1-octene. In some embodiments, the ethylene-based polymer comprises greater than 0 wt. % and less than 30 wt. % of units derived from one or more of 1-octene, 1-hexene, or 1-butene comonomers.

The ethylene-based polymer has a melt index (MI) from 0.1 g/10 min to 100 g/10 min, or from 1 g/10 min to 100 g/10 min, or from 1 g/10 min to 50 g/10 min, or from 1 g/10 min to 25 g/10 min, or from 1 g/10 min to 10 g/10 min, or from 1 g/10 min to 5 g/10 min. In embodiments herein, the ethylene-based polymer has a density in the range of 0.860 to 0.925 g/cc. All individual values and subranges of 0.860 to 0.925 g/cc are included and disclosed herein. In some embodiments, the ethylene-based composition may have a density of 0.895 to 0.925 g/cc, 0.900 to 0.925 g/cc, 0.900 to 0.920 g/cc, 0.900 to 0.915 g/cc, 0.900 to 0.912 g/cc, 0.900 to 0.911 g/cc, or 0.900 to 0.910 g/cc. In further specific embodiments, the ethylene-based polymer composition may have a density of 0.875 to 0.925 g/cc, 0.890 to 0.925 g/cc, 0.900 to 0.925 g/cc, 0.903 to 0.925 g/cc, or 0.905 to 0.925 g/cc. Density may be measured in accordance with ASTM D792.

Nonlimiting examples of suitable ethylene-based polymer include ethylene/α-olefin interpolymers, high density polyethylene (HDPE), linear low density polyethylene (LLDPE), low density polyethylene (LDPE), and combinations thereof.

In an embodiment, the ethylene-based polymer is LLDPE.

In an embodiment, the ethylene/α-olefin interpolymer is an ethylene/C₄-C₈ α-olefin copolymer having one, some, or all of the following properties:
(i) an octene comonomer; and/or
(ii) a density from 0.860 g/cc to 0.925 g/cc, or from 0.880 g/cc to 0.920 g/cc, or from 0.899 g/cc to 0.915 g/cc, or from 0.899 g/cc to 0.910 g/cc; and/or
(iii) a melt index from 0.5 g/10 min to 100 g/10 min, or from 1 g/10 min to 30 g/10 min, or from 2 g/10 min to 20 g/10 min. Nonlimiting examples of suitable ethylene/C₄-C₈ α-olefin copolymers include ENGAGE^{™} 8450 POE, ENGAGE^{™} 8402 POE, ENGAGE^{™} 8401 POE, ELITE^{™} 5815 Enhanced Polyethylene Resin, ELITE^{™} 5220 Enhanced Polyethylene Resin, or blends thereof.

In an embodiment, the ethylene-based polymer is an ethylene/α-olefin multi-block copolymer. The term "ethylene/α-olefin multi-block copolymer" refers to an ethylene/C₃-C₈ α-olefin multi-block copolymer consisting of ethylene and one copolymerizable C₃-C₈ α-olefin comonomer, or C₄-C₈ α-olefin comonomer, in polymerized form (and optional additives), the polymer characterized by multiple blocks or segments of two polymerized monomer units differing in chemical or physical properties, the blocks joined (or covalently bonded) in a linear manner, that is, a polymer comprising chemically differentiated units which are joined end-to-end with respect to polymerized ethylenic functionality. Ethylene/α-olefin multi-block copolymer includes block copolymer with two blocks (di-block) and more than two blocks (multi-block). The C₃-C₈ α-olefin is selected from propylene, butene, hexene, and octene. The ethylene/α-olefin multi-block copolymer is void of, or otherwise excludes, styrene (i.e., is styrene-free), and/or vinyl aromatic monomer, and/or conjugated diene. When referring to amounts of "ethylene" or "comonomer" in the copolymer, it is understood that this refers to polymerized units thereof. In some embodiments, the ethylene/α-olefin multi-block copolymer can be represented by the following formula: (AB)ₙ; where n is at least 1, preferably an integer greater than 1, such as 2, 3, 4, 5, 10, 15, 20, 30, 40, 50, 60, 70, 80, 90, 100, or higher, "A" represents a hard block or segment, and "B" represents a soft block or segment. The As and Bs are linked, or covalently bonded, in a substantially linear fashion, or in a linear manner, as opposed to a substantially branched or substantially star-shaped fashion. In other embodiments, A blocks and B blocks are randomly distributed along the polymer chain. In other words, the block copolymers usually do not have a structure as follows: AAA-AA-BBB-BB. In an embodiment, the ethylene/α-olefin multi-block copolymer does not have a third type of block, which comprises different comonomer(s). In another embodiment, each of block A and block B has monomers or comonomers substantially randomly distributed within the block. In other words, neither block A nor block B comprises two or more sub-segments (or sub-blocks) of distinct composition, such as a tip segment, which has a substantially different composition than the rest of the block.

In an embodiment, ethylene comprises the majority mole fraction of the whole ethylene/α-olefin multi-block copolymer, *i.e.,* ethylene comprises at least 50 wt% of the whole ethylene/α-olefin multi-block copolymer. More preferably, ethylene comprises at least 60 wt%, at least 70 wt%, or at least 80 wt%, with the substantial remainder of the whole ethylene/α-olefin multi-block copolymer comprising the C₃-C₈ α-olefin comonomer, or C₄-C₈ α-olefin comonomer. In an embodiment, the ethylene/α-olefin multi-block copolymer contains 50 wt% to 90 wt% ethylene, or 60 wt% to 85 wt% ethylene, or 65 wt% to 80 wt% ethylene.

The ethylene/α-olefin multi-block copolymer includes various amounts of "hard" segments and "soft" segments. "Hard" segments are blocks of polymerized units in which ethylene is present in an amount greater than 90 wt%, or 95 wt%, or greater than 95 wt%, or greater than 98 wt%, based on the weight of the polymer, up to 100 wt%. In other words, the comonomer content (content of monomers other than ethylene) in the hard segments is less than 10 wt%, or 5 wt%, or less than 5 wt%, or less than 2 wt%, based on the weight of the polymer, and can be as low as zero. In some embodiments, the hard segments include all, or substantially all, units derived from ethylene. "Soft" segments are blocks of polymerized units in which the comonomer content (content of monomers other than ethylene) is greater than 5 wt%, or greater than 8 wt%, greater than 10 wt%, or greater than 15 wt%, based on the weight of the polymer. In an embodiment, the comonomer content in the soft segments is greater than 20 wt%, greater than 25 wt%, greater than 30 wt%, greater than 35 wt%, greater than 40 wt%, greater than 45 wt%, greater than 50 wt%, or greater than 60 wt% and can be up to 100 wt%.

The soft segments can be present in an ethylene/α-olefin multi-block copolymer from 1 wt% to 99 wt% of the total weight of the ethylene/α-olefin multi-block copolymer, or from 5 wt% to 95 wt%, from 10 wt% to 90 wt%, from 15 wt% to 85 wt%, from 20 wt% to 80 wt%, from 25 wt% to 75 wt%, from 30 wt% to 70 wt%, from 35 wt% to 65 wt%, from 40 wt% to 60 wt%, or from 45 wt% to 55 wt% of the total weight of the ethylene/α-olefin multi-block copolymer. Conversely, the hard segments can be present in similar ranges. The soft segment weight percentage and the hard segment weight percentage can be calculated based on data obtained from DSC or NMR. Such methods and calculations are disclosed in, for example, USP 7,608,668, entitled "Ethylene/α-Olefin Block Inter-Polymers," filed on March 15, 2006, in the name of Colin L. P. Shan, Lonnie Hazlitt, et. al. and assigned to Dow Global Technologies Inc. In particular, hard and soft segment weight percentages and comonomer content may be determined as described in column 57 to column 63 of USP 7,608,668.

In addition, the ethylene/α-olefin multi-block copolymer possesses a PDI (or Mw/Mn) fitting a Schultz-Flory distribution rather than a Poisson distribution. The present ethylene/α-olefin multi-block copolymer has both a polydisperse block distribution as well as a polydisperse distribution of block sizes. This results in the formation of polymer products having improved and distinguishable physical properties. The theoretical benefits of a polydisperse block distribution have been previously modeled and discussed in Potemkin, Physical Review E (1998) 57 (6), pp. 6902-6912, and Dobrynin, J. Chem. Phvs. (1997) 107 (21), pp 9234-9238.

In an embodiment, the present ethylene/α-olefin multi-block copolymer possesses a most probable distribution of block lengths.

In an embodiment, the ethylene/α-olefin multi-block copolymer is an ethylene/1-octene multi-block copolymer (consisting only of ethylene and octene comonomer) and has one, some, or all of the following properties:
(i) a Mw/Mn from 1.7, or 1.8 to 2.2, or 2.5, or 3.5; and/or
(ii) a density from 0.860 g/cc, or 0.865 g/cc, to 0.870 g/cc, or 0.877 g/cc, or 0.880 g/cc; and/or
(iii) a melting point, Tm, from 115°C, or 118°C, or 119°C, or 120°C to 120°C, or 123°C, or 125°C; and/or
(iv) a melt index (MI) from 0.1 g/10 min, or 0.5 g/10 min to 1.0 g/10 min, or 2.0 g/10 min, or 5 g/10 min, or 10 g/10 min; and/or
(v) from 50 to 85 wt% soft segment and from 50 to 15 wt% hard segment (based on total weight of the ethylene/octene multi-block copolymer); and/or
(vi) from 10 mol%, or 13 mol%, or 14 mol%, or 15 mol% to 16 mol%, or 17 mol%, or 18 mol%, or 19 mol%, or 20 mol% octene in the soft segment; and/or
(vii) from 0.5 mol%, or 1.0 mol%, or 2.0 mol%, or 3.0 mol% to 4.0 mol%, or 5 mol%, or 6 mol%, or 7 mol%, or 9 mol% octene in the hard segment; and/or
(viii) an elastic recovery (Re) from 50%, or 60% to 70%, or 80%, or 90%, at 300% min⁻¹ deformation rate at 21°C as measured in accordance with ASTM D 1708; and/or
(ix) a polydisperse distribution of blocks and a polydisperse distribution of block sizes (hereafter referred to as multi-block copolymer properties (i)-(ix)).

In an embodiment, the ethylene/α-olefin multi-block copolymer is an ethylene/octene multi-block copolymer. The ethylene/octene multi-block copolymer is sold under the tradename INFUSE^{™} Olefin Block Copolymer, available from The Dow Chemical Company, Midland, Michigan, USA.

The ethylene/α-olefin multi-block copolymer can be produced via a chain shuttling process such as described in USP 7,858,706. In particular, suitable chain shuttling agents and related information are listed in col. 16 line 39 through col. 19 line 44. Suitable catalysts are described in col. 19 line 45 through col. 46 line 19 and suitable co-catalysts in col. 46 line 20 through col. 51 line 28. The process is described throughout the document, but particularly in col. 51 line 29 through col. 54 line 56. The process is also described, for example, in the following: USP 7,608,668; USP 7,893,166; and USP 7,947,793.

### C. Free radical initiator

The crosslinkable polymer composition from which the 3DRLM is formed includes a free radical initiator. In an embodiment, the free radical initiator is an organic peroxide. Nonlimiting examples of suitable organic peroxide include bis(1,1-dimethylethyl) peroxide; bis(1,1-dimethylpropyl) peroxide; 2,5-dimethyl-2,5-bis(1,1-dimethylethylperoxy) hexane; 2,5-dimethyl-2,5-bis(1,1-dimethylethylperoxy) hexyne; 4,4-bis(1,1-dimethylethylperoxy) valeric acid; butyl ester; 1,1-bis(1,1-dimethylethylperoxy)-3,3,5-trimethylcyclohexane; benzoyl peroxide; tert-butyl peroxybenzoate; di-tert-amyl peroxide ("DTAP"); bis(α-t-butylperoxyisopropyl) benzene ("BIPB"); isopropylcumyl t-butyl peroxide; t-butylcumylperoxide; di-t-butyl peroxide; 2,5-bis(t-butylperoxy)-2,5-dimethylhexane; 2,5-bis(t-butylperoxy)-2,5-dimethylhexyne-3,1,1-bis(t-butylperoxy)-3,3,5-- trimethylcyclohexane; isopropylcumyl cumylperoxide; butyl 4,4-di(tert-
butylperoxy) valerate; di(isopropylcumyl) peroxide; dicumyl peroxide, and combinations thereof.

In an embodiment the free radical initiator is dicumyl peroxide.

### D. BiTEMPS methacrylate

The crosslinkable polymer composition from which the 3DRLM is formed includes 2,2,6,6-tetramethyl-4-piperidyl methacrylate disulfide, interchangeably referred to as "BiTEMPS methacrylate," or "BiTEMPS" or "BiT." BiTEMPS methacrylate disulfide has the Structure 1 below.

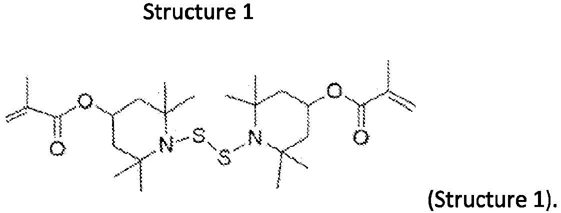

In an embodiment, the crosslinkable polymer composition includes
from 70 wt% to 98.5 wt%, or from 77 wt% to 98.5 wt% of the ethylene-based polymer;
from 0.1 wt% to 10 wt%, or from 0.1 wt% to 5 wt% 0.1 wt% to 3.0 wt% or from 0.1 wt% to 1.5 wt%, or from 0.5 wt% to 1.5 wt% free radical initiator that is an organic peroxide (such as dicumyl peroxide for example); and
from 1 wt% to 20 wt%, or from 1 wt% to 15 wt%, or from 2 wt% to 20 wt%, or from 2 wt% to 10 wt% BiTEMPS methacrylate disulfide. It is understood that the aggregate of the ethylene-based polymer, the free radical initiator, and the BiTEMPS methacrylate disulfide (and optional additives) amount to 100 wt% of the crosslinkable polymer composition.

The crosslinked composition of the continuous strands for the 3DRLM is formed from the crosslinkable polymer composition. The crosslinkable polymer composition is melt blended at a temperature from 100 °C. to 250 °C., or from 120 °C. to 210 °C., or from 140 °C. to 210 °C., or from 140 °C. to 190 °C. to trigger the crosslinking reaction and form the crosslinked composition. In an embodiment, the crosslinked composition includes an ethylene-based polymer and 2,2,6,6-tetramethyl-4-piperidyl methacrylate disulfide (BiTEMPS methacrylate). The crosslinked composition contains disulfide linkages formed from the BiTEMPS methacrylate by way of the crosslinking reaction, the disulfide linkages having the Structure 2 below.

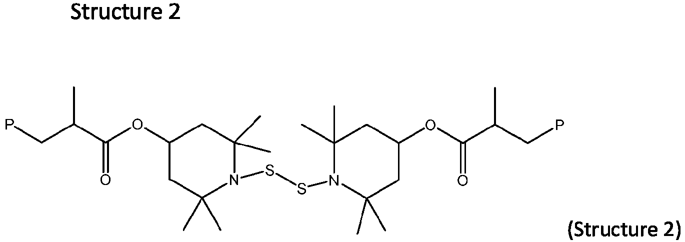

The term (and structure) "P" in Structure 2 above refers to the chain of polymerized ethylene (and optional comonomer(s)) for the ethylene-based polymer. The ethylene-based polymer of the crosslinked composition can be any ethylene-based polymer with a MI from 0.1 g/10 min to 100 g/10 min as previously disclosed herein. Nonlimiting examples of suitable ethylene-based polymer include ethylene/α-olefin interpolymers, high density polyethylene (HDPE), linear low density polyethylene (LLDPE), low density polyethylene (LDPE), and combinations thereof.

In an embodiment, the ethylene-based polymer is a virgin ethylene-based polymer. A "virgin ethylene-based polymer," as used herein, is an ethylene-based polymer that has not been subjected to a crosslinking reaction. In other words, the term "virgin ethylene-based polymer" refers to the ethylene-based polymer that is present in the crosslinked composition prior to the ethylene-based polymer being crosslinked with the BiTEMPS methacrylate. The virgin ethylene-based polymer is the ethylene-based polymer prior to crosslinking, the crosslinked composition containing the same ethylene-based polymer that was virgin, but is now crosslinked with BiTEMPS methacrylate. In this way, the virgin ethylene-based polymer serves as a baseline to evaluate the properties of the crosslinked composition. The crosslinked composition has
(i) a storage modulus value, G', at 140°C that is greater than the storage modulus value, G', for the virgin ethylene-based polymer at 140°C;
(ii) a tan delta value at 60°C that is less than the tan delta value of the virgin ethylene-based polymer at 60°C; and
(iii) a tan delta value at 140°C that is less than the tan delta value of the virgin ethylene-based polymer at 140°C,
and is formed into the 3DRLM as disclosed above.

In an embodiment, the crosslinked composition includes from 80 wt% to 99.9 wt%, or from 80 wt% to 98 wt% of the ethylene-based polymer and (ii) linkages of Structure (2) formed from 2 wt% to 20 wt% BiTEMPS methacrylate, the aggregate of the ethylene-based polymer and the linkages of Structure (2) (formed from the BiTEMPS methacrylate) (and optional additives) amounting to 100 wt% of the crosslinked composition. The crosslinked composition in the strands of the 3DRLM has
(i) a storage modulus value, G', at 60°C greater than 1MPa;
(ii) a storage modulus value, G', at 140°C greater than 0.1 MPa;
(iii) a tan delta value at 60°C less than 0.17; and
(iv) a tan delta value at 140°C less than 0.62.

### E. Blend component

In an embodiment, the crosslinkable polymer composition and/or the crosslinked composition includes a blend component. Nonlimiting examples of suitable blend component include ethylene vinyl acetate (EVA), polyolefins (e.g., polyethylene other than the ethylene-based polymer crosslinked with BiTEMPS methacrylate and polypropylene), additional "virgin ethylene-based polymer (e.g., the same ethylene-based polymer used in the crosslinked composition, but that is not reacted or crosslinked with the BiTEMPS methacrylate), polymers (e.g., polystyrene, ABS, SBS and the like) and combinations thereof. Non-limiting examples of suitable polyolefins include polyethylene; polypropylene; polybutylene (e.g., polybutene-1); polypentene-1; polyhexene-1; polyoctene-1; polydecene-1; poly-3-methylbutene-1; poly-4-methylpentene-I; polyisoprene; polybutadiene; poly-1,5-hexadiene; interpolymers derived from olefins; interpolymers derived from olefins and other polymers such as polyvinyl chloride, polystyrene, polyurethane, and the like; and mixtures thereof.

In an embodiment, the polyolefin is a homopolymer such as polyethylene, polypropylene, polybutylene, polypentene-1, poly-3-methylbutene-1, poly-4-methylpentene-1, polyisoprene, polybutadiene, poly-1,5-hexadiene, polyhexene-1, polyoctene-1 and polydecene-1.

Nonlimiting examples of suitable polyethylene as blend component (other than the ethylene-based polymer that is crosslinked with BITEMPS methacrylate) include ultra low density polyethylene (ULDPE), linear low density polyethylene (LLDPE), low density polyethylene (LDPE), medium density polyethylene (MDPE), high density polyethylene (HDPE), high molecular weight high density polyethylene (HMW-HDPE), ultra high molecular weight polyethylene (UHMW-PE) and combinations thereof. Nonlimiting examples of polypropylene include low density polypropylene (LDPP), high density polypropylene (HDPP), high-melt strength polypropylene (HMS-PP) and combination thereof. In an embodiment, the blend component is a high-melt-strength polypropylene (HMS-PP), a low density polyethylene (LDPE) or a combination thereof. Such are commercially available LDPEs or LLDPEs are under the tradenames DOWLEX^{™}, DNDA, and ATTANE^{™}, all of which are available from The Dow Chemical Company (Midland, Mich.).

### F. Additives

The crosslinkable polymer composition and/or the crosslinked composition may contain one or more optional additives. Nonlimiting examples of suitable additives include grafting initiators, cross-linking catalysts, blowing agent, blowing agent activators (e.g., zinc oxide, zinc stearate and the like), coagents (e.g., triallyl cyanurate), plasticizers, processing oils, processing aids, carbon black, colorants or pigments, stability control agents, nucleating agents, fillers, antioxidants, acid scavengers, ultraviolet (UV) stabilizers, flame retardants, lubricants, processing aids, extrusion aids, and combinations thereof. When present, the total amount of additive can be from greater than 0 to 80%, or from 0.001% to 70%, or from 0.01% to 60%, or from 0.1% to 50%, or from 0.1% to 40%, or from 0.1% to 20%, or from 0.1% to 10 %, or from 0.1% to 5% of the total weight of the composition.

### G. Process

BiTEMPS methacrylate is a "dynamic crosslinker." The dynamic crosslinker BiTEMPS methacrylate enables formation of a crosslinked network of the ethylene-based polymer by way of disulfide linkages between the chains of the ethylene-based polymer. The crosslinked network is formed by the ethylene-based polymer and BiTEMPS methacrylate in the presence of the free radical initiator to form the crosslinked ethylene-based polymer composition. The crosslinking is dynamic because the disulfide linkages may be broken, allowing for chain mobility and exchange when the crosslinked ethylene-based polymer composition is subjected to a "reprocessing temperature," the reprocessing temperature being a temperature from 160 °C. to 230 °C., or from 160 °C. to 200 °C. At the reprocessing temperature, the disulfide linkages in the crosslinked ethylene-based polymer composition are broken, forming a reprocessable ethylene-based polymer composition. Cooling the reprocessable ethylene-based composition below the reprocessing temperature forms a re-crosslinked ethylene-based polymer composition.

The dynamic crosslinker BiTEMPS methacrylate enables a cyclic "reprocessing" for fabrication of new polymeric articles. When the crosslinked ethylene-based polymer composition is heated to the reprocessing temperature, the disulfide linkages break, or otherwise cleave, enabling the previously-crosslinked ethylene-based polymer composition to flow at the reprocessing temperature, forming "a reprocessable ethylene-based polymer composition." Heating to the reprocessing temperature enables link breaking and polymer chain flow, allowing the ethylene-based composition to be reshaped readily. At the reprocessing temperature, the reprocessable ethylene-based polymer composition is no longer crosslinked, but rather is flowable, enabling shaping and/or fabrication of the now flowable re-processable ethylene-based composition (with BiTEMPS methacrylate) into a new pre-form or article. Upon cooling to below the "reprocessing temperature," the disulfide linkages form again, the network is re-established, and the re-crosslinked ethylene-based compositions is formed in the new article configuration with a return to the high viscosity (no flow at room temperature) and resistance to mechanical deformation indicative of the crosslinked network. When the newly-formed article of the reprocessable ethylene-based polymer composition is cooled below the reprocessing temperature, the disulfide linkages in the reprocessable ethylene-based polymer composition are re-established, and the ethylene-based polymer (with BiTEMPS methacrylate) becomes a re-crosslinked ethylene-based polymer composition in the shape of the newly-fabricated article. Below the reprocessing temperature, the network disulfide linkages are stable, and the re-crosslinked ethylene-based polymer composition exhibits the high viscosity and resistance to mechanical deformation indicative of a crosslinked network. This cycle of crosslink/reprocess/re-crosslink into a new article can be repeated.

Bounded by no particular theory, the number of "reprocessing" cycles that are possible with the present crosslinked ethylene-based composition (before competitive thermal and oxidative permanent crosslinking occurs and prevents further reprocessing), can be determined by calculating the ratio of the melt viscosity of the crosslinked ethylene-based polymer composition before and after a reprocessing cycle. For the crosslinked ethylene-based polymer composition to be re-processable, the ratio of the viscosity after reprocessing to the viscosity before reprocessing is from 0.5 to 5, or from 0.7 to 3 or from 0.9 to 2 or from 0.95 to 1.2.

Other metrics for monitoring the number of "reprocessing" cycles that are possible with the BiTEMPS methacrylate dynamic crosslinker before competitive oxidative permanent crosslinking occurs include visual observation. Formed film that is mechanically deformed is heated to the reprocessing temperature and is visually inspected to determine whether the mechanically deformed film heals to form a stable film.

The present disclosure provides a process. In an embodiment, the process includes heating a first article to a reprocessing temperature. The first article is composed of the three-dimensional random loop material that is the web structure of a multitude of winding continuous strands melt-bonded together at a multitude of contact points to form the multitude of loops. Each continuous strand is composed of the crosslinked composition including the ethylene-based polymer, and linkages of Structure 2 (formed from 2,2,6,6-tetramethyl-4-piperidyl methacrylate disulfide (BiTEMPS) methacrylate)) (and optional additives). The process includes forming, at the reprocessing temperature, the first article into a re-processable ethylene-based polymer composition. The process includes shaping, at the reprocessing temperature, the re-processable ethylene-based composition into a re-processed pre-form. The process includes cooling the re-processed pre-form to below the reprocessing temperature and forming a second article composed of a re-crosslinked ethylene-based polymer composition composed of (i) the ethylene-based polymer and (ii) Structure 2 (formed from the BiTEMPS methacrylate).

The second article can be the same as, or different than, the first article.

In an embodiment, the shaping step is a procedure selected from the group consisting of injection molding, extrusion, extrusion molding, thermoforming, slush molding, over molding, insert molding, blow molding, cast molding, tentering, compression molding, and combinations thereof.

Nonlimiting examples of suitable second articles for the present re-crosslinked (re-processed) ethylene-based polymer (with BiTEMPS methacrylate) composition include 3DL articles; elastic film; elastic fiber; soft touch good, such as tooth brush handles and appliance handles; gaskets and profiles; adhesives (including hot melt adhesives and pressure sensitive adhesives); footwear (including shoe soles and shoe liners); auto interior parts and extruded profiles; foam articles (both open cell foam and closed cell foam); impact modifiers for other thermoplastic polymers such as high density polyethylene, isotactic polypropylene, or other olefin polymers; coated fabrics; hoses; tubing; weather stripping; cap liners; flooring; and combinations thereof.

Applicant discovered 3DRLM capable of undergoing reversible crosslinking at reprocessing temperatures. This is achieved by forming 3DRLM from a crosslinkable polymer composition of ethylene-based polymer, peroxide, and BITEMPS methacrylate (and optional additive). The inventive compositions form 3DRLM with strands composed of crosslinked composition, wherein the crosslinked composition is crosslinked at application use temperatures but can be melt reprocessed at typical 3DRLM processing temperatures (~160 - 230° C.). As a result, the proposed solution is expected to offer benefits in heat resistance and durability for 3DRLM loop cushions, while maintaining (re)processability under typical extrusion temperatures.

By way of example, and not limitation, some embodiments of the present disclosure will now be described in detail in the following examples.

### 1. Materials

Materials used in the comparative samples (CS) and inventive examples (IE) are provided in Table 1 below.

**Table 1 - Materials used in the inventive examples ("IE") and comparative samples ("CS")**

| Component/Description | Structure/properties | Source |
|---|---|---|
| ENGAGE 8450 | Ethylene/octene copolymer density- 0.902 g/cc, MI - 3 g/10 min | The Dow Chemical Company |
| Dicumyl Peroxide ("DCP") Radical initiator | C₁₈H₂₂O₂ | Sigma-Aldrich |
| BiTEMPS methacrylate crosslinker | 2,2,6,6-tetramethyl-4-piperidyl methacrylate disulfide (Structure 1) C₂₆H₄₄N₂O₄S₂ | Custom synthesis |
| | 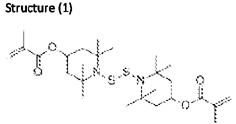 | |

### 2. Synthesis of BITEMPS methacrylate

To synthesize BiTEMPS methacrylate, 2,2,6,6-tetramethyl-4-piperidyl methacrylate (8.78 g, 39.0 mmol, supplied by TCI America) is first dissolved in anhydrous petroleum ether (~90 mL, supplied by Sigma-Aldrich, dried over molecular sieves for 48 hr before use) and cooled to - 70°C in a dry ice/acetone bath. Afterward, sulfur monochloride (1.30 g, 9.7 mmol, supplied by Sigma-Aldrich) is dissolved in anhydrous petroleum ether (~1.25 mL) and added dropwise to the reaction vessel over the course of 30 minutes. The solution is stirred at -70°C for an additional 30 minutes and at room temperature for 15 minutes. Next, BiTEMPS methacrylate is precipitated out by pouring the reaction solution into copious distilled water and stirring at room temperature overnight. The precipitates are collected, vacuum-filtered, and vacuum-dried at 60°C for 48 hr to obtain BiTEMPS methacrylate, shown as Structure 1 below.

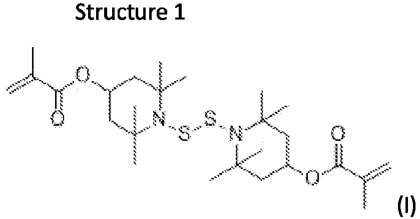

### 3. Formulations

ENGAGE 8450, dicumyl peroxide, and BiTEMPS methacrylate were combined (in the amounts shown in Table 2 below) and batch mixed at 100° C. to form a crosslinkable polymer composition, Formulation A. Formulation A was heated on an RPA at 160° C. for 60 minutes (min) to initiate the crosslinking reaction. Properties of the crosslinked composition are provided in Table 2 below.

**Table 2: Formulations and Properties**

| Component/PHR | Formulation 1 | Formulation A |
|---|---|---|
| ENGAGE 8450 | 100 | 100 |
| Dicumyl Peroxide | | 1 |
| BITEMPS Methacrylate | | 5 |
| RPA S' @ 160° C., 60 min (dNm) | | 1.68 |
| RPA n* @ 0.1 rad/s, 160° C. (Pa-s) | | 947,253 |
| RPA n* @ 300 rad/s, 160° C. (Pa-s) | | 1,222 |
| RPA tan delta @ 0.1 rad/s, 160° C. | | 0.42 |
| RPA n* @ 0.1 rad/s, 230° C. (Pa-s) | | 54,258 |
| RPA n* @ 300 rad/s, 230° C. (Pa-s) | | 459 |
| RPA tan delta @ 0.1 rad/s, 230° C. | | 1.31 |
| Viscosity Temperature Reprocessing Ratio | | 17.5 |
| Reprocessable | Yes | Yes |

The viscosity temperature reprocessing ratio is defined as the ratio of n* at 0.1 rad/s, 160° C. to n* at 0.1 rad/s, 230° C. The S' at 160° C., 60 min and n* at 0.1 rad/s, 160° C. indicate Formulation A underwent a crosslinking reaction. The significant drop in n* at 0.1 rad/s, 230° C. (high viscosity temperature reprocessing ratio) indicates the crosslinked composition can be reprocessed at this elevated temperature. Formulation 1 is thermoplastic with no crosslinking, so it is inherently reprocessable.

Samples were prepared by extruding strands on a Xplore MC 40 micro compounder ("MC 40") and collecting the coiled strand. 20 g of sample were processed on the MC 40. The temperature was set to 200° C. for all runs. Initially the screw speed was set to 25 rpm. Approximately 10 g of sample was added to the MC 40 and allowed to melt for about 30 seconds (s). Then, an additional 10 g of sample was added. The screw speed was increased to 50 rpm. Then, the material was recirculated in the micro compounder for 5 min at which time a stable torque reading was achieved, as recorded in Table 3 below A single extrudate strand approximately 4 mm in diameter was then extruded from the micro compounder. The extruded strand was collected on a Teflon sheet held approximately 15.24 cm (6 inches) from the die exit and moved by hand to collect a coiled strand where the extrudate coiled on itself to form junction points, replicating the 3D loop extrusion and bonding process. The coiled strand was allowed to cool to room temperature.

**Table 3: Extrusion samples**

| Example | CS-1 | IE-B | IE-C | IE-D |
|---|---|---|---|---|
| Composition | Formulation 1 | IE-A | 50 wt% Formulation 1 + 50 wt% IE-A | Formulation A |
| Micro compounder Torque, Nm | 16 | 28 | 20 | 23 |
| Extruded strand diameter, mm | 3.8 | 3.7 | 3.8 | 3.7 |
| Strand debonding peak load, N (Ibf) | 98.3 (22.1) | 16.5 (3.7) | 44.0 (9.9) | 16.9 (3.8) |

The strength of the strand junctions was evaluated by cutting individual bonded junction points from the coiled strand and evaluating under uniaxial tension on an Instron test frame. The peak load was measured for 3 to 5 specimens for each sample, as reported in Table 3 (above). For the comparative sample (CS1) made with a conventional thermoplastic ethylene/octene copolymer (ENGAGE 8450), most of the strands broke before debonding at the junction point occurred.

For the inventive examples composed of reversibly crosslinked compositions (IE-B, IE-C, IE-D), the strands debonded at the junction point at the reported strand debonding peak load (Table 3 above). While the peak load for debonding of IE-B, IE-C, and IE-D was lower than for the comparative sample CS-1, each inventive example of IE-B, IE-C, and IE-D had a measurable debonding force, indicating adhesion between the extruded strands did occur and that an article similar to a 3DRLM could be formed from the reversibly crosslinked compositions.

For IE-D, the sample was formed using crosslinkable polymer composition Formulation A, demonstrating that the crosslinkable polymer composition can be readily processed into the final article, an extruded article comparable to a 3DRLM article, with reversible crosslinks established.
Inventive examples IE-B to IE-D were made using Inventive example IE-A. Formulation A was crosslinked by compression molding into a plaque (10 cm x 10 cm x 2 mm) at 180 °C for 15 min to form IE-A. IE-A was then cut into small pieces for extrusion experiments on a Xplore MC 40 micro compounder. Examples IE-B and IE-C demonstrate that the crosslinked material IE-A can be melt (re)processed into a new article (comparable to a 3DRLM article) due to the reversible nature of the crosslinks at the processing temperature. Thus, each inventive example IE-B, IE-C, and IE-D demonstrates the ability of 3DRLM composed of ethylene/octene copolymer crosslinked with BiTEMPS methacrylate to be melt processed and/or melt reprocessed.

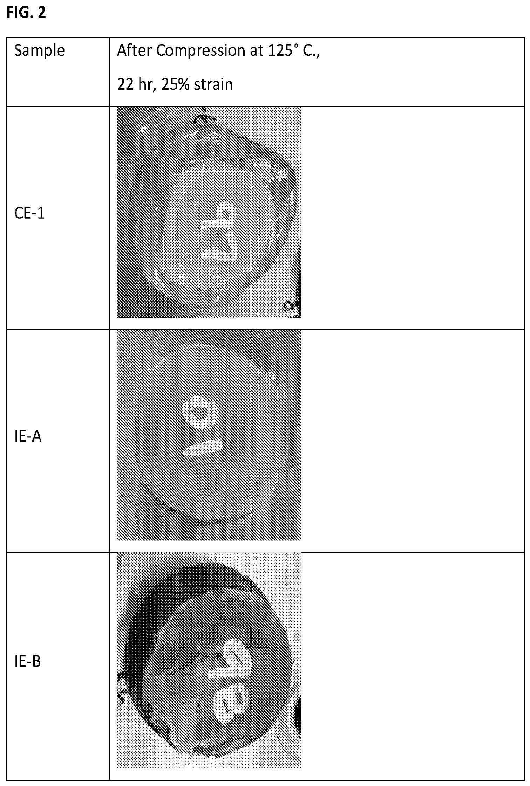

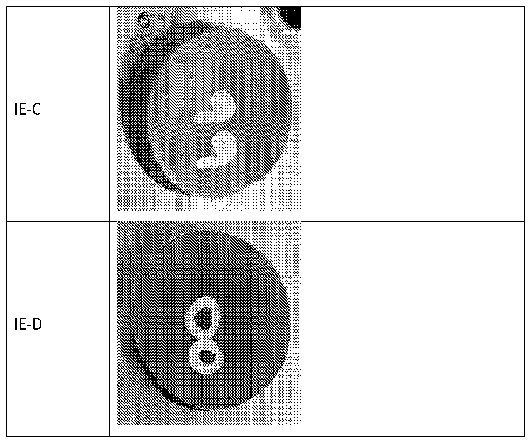

Furthermore, to demonstrate the improved heat resistance of the crosslinked IE-B, IE-C, and IE-D examples, the extruded strands were reprocessed to form compression molded pucks for compression set testing. The strands were chopped into pieces and compression molded into 3.05 cm (1.2 inch) diameter, 1.27 cm (0.5 inch) thick pucks at 180° C. for 15 min. First, compression set at 70° C. was evaluated as reported in Table 4. IE-B, IE-C, and IE-D had similar compression set as the non-crosslinked CS-1 example, demonstrating the reversibly crosslinked compositions retain similar physical properties at 70° C. Each compression set puck of CS-1, IE-B, IE-C, and IE-D was then reprocessed by compression molding to form a new 3.05 cm (1.2 inch) diameter, 1.27 cm (0.5 inch) thick puck by compression molding at 180° C. for 15 min. In addition, the compression molded plaque of IE-A was also compression molded into a compression set puck. Each sample was then compressed for 22 hr at 125° C. at 25% strain, then allowed to cool to room temperature. FIG. 2 shows photographs of the top-down view of each compression set puck after compression at 125° C. for 22 hr, 25% strain. CS-1 melted and deformed as 125° C. is above the melting point of the sample and it is not crosslinked. Meanwhile, IE-A, IE-B, IE-C, and IE-D all retained their shape demonstrating the improved heat resistance of these crosslinked samples.

**Table 4 -- Compression set**

| | Compression Set (22 hr, 70° C.) % |
|---|---|
| CS-1 | 61 |
| IE-A | -- |
| IE-B | 65 |
| IE-C | 63 |
| IE-D | 67 |

## Claims

1. An article comprising:
a three-dimensional random loop material comprising a web structure of a multitude of winding continuous strands melt-bonded together at a multitude of contact points to form a multitude of loops;
each continuous strand composed of a crosslinked composition formed from starting materials comprising
an ethylene-based polymer; and
2,2,6,6-tetramethyl-4-piperidyl methacrylate disulfide (BiTEMPS methacrylate).

2. The article of claim 1 wherein the crosslinked composition comprises linkages of Structure 2

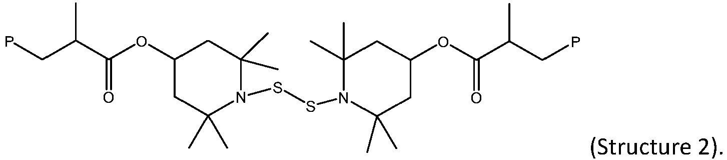

3. The article of any of claims 1-2 wherein the crosslinked composition is formed from starting materials comprising:
from 80 wt% to 99 wt% of an ethylene-based polymer having a melt index from 0.1 g/10 min to 100 g/10 min; and
from 20 wt% to 1 wt% of the BiTEMPS methacrylate.

4. The article of any of claims 1-3 wherein the ethylene-based polymer is an ethylene/α-olefin interpolymer having a density from 0.860 g/cc to 0.925 g/cc.

5. The article of any of claims 1-4 wherein ethylene-based polymer is an ethylene/octene copolymer.

6. The article of any of claims 1-5 wherein
the ethylene-based polymer is a virgin ethylene-based polymer prior to the crosslinked composition being crosslinked; and
the crosslinked composition has
(i) a storage modulus value, G', at 140°C that is greater than the storage modulus value, G', for the virgin ethylene-based polymer at 140°C;
(ii) a tan delta value at 60°C that is less than the tan delta value of the virgin ethylene-based polymer at 60°C; and
(iii) a tan delta value at 140°C that is less than the tan delta value of the virgin ethylene-based polymer at 140°C.

7. An article comprising:
a three-dimensional random loop material comprising a web structure of a multitude of winding continuous strands melt-bonded together at a multitude of contact points to form a multitude of loops;
each continuous strand composed of a crosslinked composition comprising
an ethylene-based polymer; and
linkages having a Structure 2

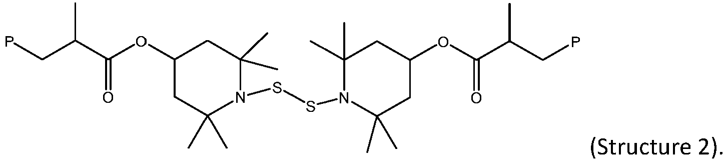

8. A process comprising:
heating a first article to a reprocessing temperature, the first article composed of a three-dimensional random loop material comprising a web structure of a multitude of winding continuous strands melt-bonded together at a multitude of contact points to form a multitude of loops, each continuous strand composed of a crosslinked composition comprising
(i) an ethylene-based polymer, and
(ii) linkages having a Structure (2) 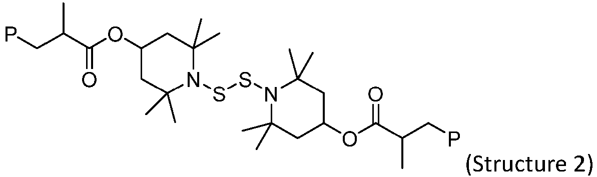
forming, at the reprocessing temperature, the first article into a re-processable ethylene-based polymer composition;
shaping, at the reprocessing temperature, the re-processable ethylene-based composition into a re-processed pre-form; and
cooling the re-processed pre-form to below the reprocessing temperature and forming a second article composed of a re-crosslinked ethylene-based polymer composition composed of (i) the ethylene-based polymer and (ii) linkages having the Structure (2).

## Patentansprüche

1. Gegenstand, umfassend:
ein dreidimensionales unregelmäßiges Schlingenmaterial, umfassend eine Netzstruktur aus einer Vielzahl von gewundenen kontinuierlichen Strängen, die an einer Vielzahl von Kontaktpunkten schmelzverbunden sind, um eine Vielzahl von Schlingen auszubilden;
jeder kontinuierliche Strang, der aus einer vernetzten Zusammensetzung gebildet ist, die aus Ausgangsmaterialien ausgebildet ist, umfassend
ein Polymer auf Ethylenbasis; und
2,2,6,6-Tetramethyl-4-piperidylmethacrylat-disulfid (BiTEMPS-methacrylat).

2. Gegenstand nach Anspruch 1, wobei die vernetzte Zusammensetzung Verknüpfungen der Struktur 2 umfasst

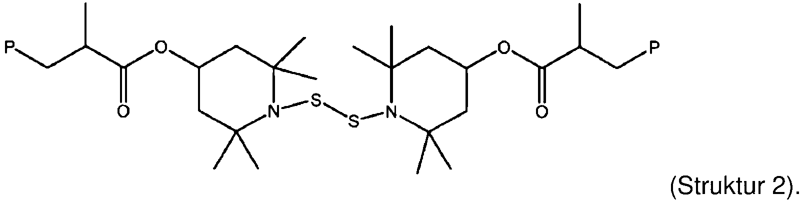

3. Gegenstand nach einem der Ansprüche 1 bis 2, wobei die vernetzte Zusammensetzung aus Ausgangsmaterialien ausgebildet wird, umfassend:
von 80 Gew.-% bis 99 Gew.-% ein Polymer auf Ethylenbasis, das einen Schmelzindex von 0,1 g/10 min bis 100 g/10 min aufweist; und
von 20 Gew.-% bis 1 Gew.-% das BiTEMPS-methacrylat.

4. Gegenstand nach einem der Ansprüche 1 bis 3, wobei das Polymer auf Ethylenbasis ein Ethylen/α-Olefin-Interpolymer ist, das eine Dichte von 0,860 g/cm³ bis 0,925 g/cm³ aufweist.

5. Gegenstand nach einem der Ansprüche 1 bis 4, wobei das Polymer auf Ethylenbasis ein Ethylen/Octen-Copolymer ist.

6. Gegenstand nach einem der Ansprüche 1 bis 5, wobei
das Polymer auf Ethylenbasis ein reines Polymer auf Ethylenbasis ist, bevor die vernetzte Zusammensetzung vernetzt wird; und
die vernetzte Zusammensetzung aufweist
(i) einen Speichermodulwert, G', bei 140 °C, der größer als der Speichermodulwert, G', für das reine Polymer auf Ethylenbasis bei 140 °C ist;
(ii) einen Tangens-Delta-Wert bei 60 °C, der geringer als der Tangens-Delta-Wert des reinen Polymers auf Ethylenbasis bei 60 °C ist; und
(iii) einen Tangens-Delta-Wert bei 140°C, der geringer als der Tangens-Delta-Wert des reinen Polymers auf Ethylenbasis bei 140 °C ist.

7. Gegenstand, umfassend:
ein dreidimensionales unregelmäßiges Schlingenmaterial, umfassend eine Netzstruktur aus einer Vielzahl von gewundenen kontinuierlichen Strängen, die an einer Vielzahl von Kontaktpunkten schmelzverbunden sind, um eine Vielzahl von Schlingen auszubilden;
jeder kontinuierliche Strang, der aus einer vernetzten Zusammensetzung gebildet ist, umfassend
ein Polymer auf Ethylenbasis; und
Verknüpfungen, die eine Struktur 2 aufweisen

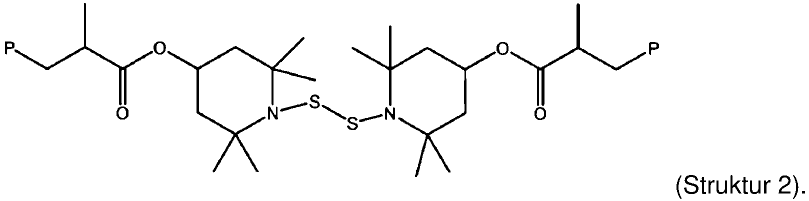

8. Verfahren, umfassend:
Erwärmen eines ersten Gegenstands auf eine Wiederaufbereitungstemperatur, wobei der erste Gegenstand aus einem dreidimensionalen unregelmäßigen Schlingenmaterial gebildet ist, umfassend eine Netzstruktur aus einer Vielzahl von gewundenen kontinuierlichen Strängen, die an einer Vielzahl von Kontaktpunkten schmelzverbunden sind, um eine Vielzahl von Schlingen auszubilden, wobei jeder kontinuierliche Strang aus einer vernetzten Zusammensetzung gebildet ist, umfassend
(i) ein Polymer auf Ethylenbasis und
(ii) Verknüpfungen, die eine Struktur (2) aufweisen 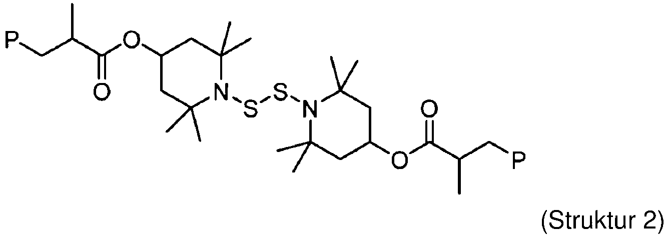
Ausbilden, bei der Wiederaufbereitungstemperatur, des ersten Gegenstands zu einer wiederaufbereitbaren Polymerzusammensetzung auf Ethylenbasis;
Formen, bei der Wiederaufbereitungstemperatur, der wiederaufbereitbaren Zusammensetzung auf Ethylenbasis in einen wiederaufbereiteten Vorformling; und
Abkühlen der wiederaufbereiteten Vorform auf unter die Wiederaufbereitungstemperatur und Ausbilden eines zweiten Gegenstands, der aus einer erneut vernetzten Polymerzusammensetzung auf Ethylenbasis gebildet ist, die aus (i) dem Polymer auf Ethylenbasis und (ii) Verknüpfungen, die die Struktur (2) aufweisen, gebildet ist.

## Revendications

1. Article comprenant :
un matériau à boucles aléatoires tridimensionnelles comprenant une structure de bande composée d'une multitude de brins continus enroulés liés par fusion ensemble en une multitude de points de contact pour former une multitude de boucles ;
chaque brin continu composé d'une composition réticulée formée à partir de matériaux de départ comprenant
un polymère à base d'éthylène ; et
du disulfure de méthacrylate de 2,2,6,6-tétraméthyl-4-
pipéridyle (méthacrylate BiTEMPS).

2. Article selon la revendication 1, dans lequel la composition réticulée comprend des liaisons de Structure 2

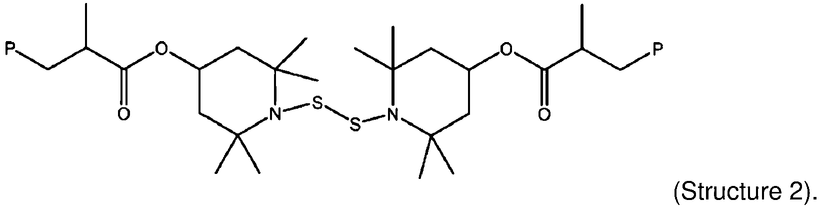

3. Article selon l'une quelconque des revendications 1 à 2, dans lequel la composition réticulée est formée à partir de matériaux de départ comprenant :
de 80 % en poids à 99 % en poids d'un polymère à base d'éthylène ayant un indice de fusion de 0,1 g/10 min à 100 g/10 min ; et
de 20 % en poids à 1 % en poids du méthacrylate BiTEMPS.

4. Article selon l'une quelconque des revendications 1 à 3, dans lequel le polymère à base d'éthylène est un interpolymère d'éthylène/α-oléfine ayant une masse volumique allant de 0,860 g/cm³ à 0,925 g/cm³.

5. Article selon l'une quelconque des revendications 1 à 4, dans lequel le polymère à base d'éthylène est un copolymère d'éthylène/octène.

6. Article selon l'une quelconque des revendications 1 à 5, dans lequel
le polymère à base d'éthylène est un polymère vierge à base d'éthylène avant que la composition réticulée ne soit réticulée ; et
la composition réticulée a
(i) une valeur de module de stockage, G', à 140 °C qui est supérieure à la valeur de module de stockage, G', pour le polymère vierge à base d'éthylène à 140 °C ;
(ii) une valeur tan delta à 60 °C qui est inférieure à la valeur tan delta du polymère vierge à base d'éthylène à 60 °C ; et
(iii) une valeur tan delta à 140 °C qui est inférieure à la valeur tan delta du polymère vierge à base d'éthylène à 140 °C.

7. Article comprenant :
un matériau à boucles aléatoires tridimensionnelles comprenant une structure de bande composée d'une multitude de brins continus enroulés liés par fusion ensemble en une multitude de points de contact pour former une multitude de boucles ;
chaque brin continu composé d'une composition réticulée comprenant
un polymère à base d'éthylène ; et
des liaisons ayant une Structure 2

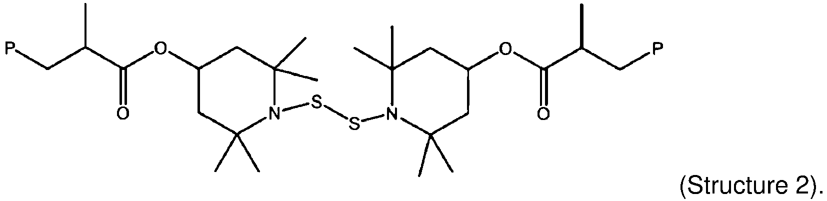

8. Procédé comprenant :
le chauffage d'un premier article à une température de retraitement, le premier article étant composé d'un matériau à boucles aléatoires tridimensionnelles comprenant une structure de bande d'une multitude de brins continus enroulés liés par fusion ensemble au niveau d'une multitude de points de contact pour former une multitude de boucles, chaque brin continu composé d'une composition réticulée comprenant
(i) un polymère à base d'éthylène, et
(ii) des liaisons ayant une Structure (2) 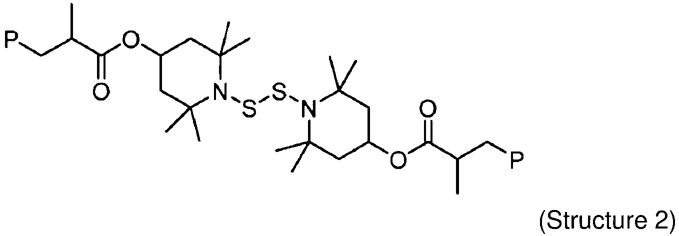
la formation, à la température de retraitement, du premier article en une composition de polymère à base d'éthylène pouvant être traitée de nouveau ;
la mise en forme, à la température de retraitement, de la composition à base d'éthylène pouvant être retraitée en une préforme retraitée ; et
le refroidissement de la préforme retraitée à une température inférieure à la température de retraitement et la formation d'un second article composé d'une composition de polymère à base d'éthylène réticulée composée (i) du polymère à base d'éthylène et (ii) de liaisons ayant la Structure (2).
